# EUROPEAN PATENT APPLICATION

(11) **EP 4 354 187 A1**
(43) Date of publication of application: **17.04.2024**
(21) Application number: 23197237.3
(22) Date of filing: 13.09.2023
(51) Int. Cl.: G02B 5/04, G01B 11/26, G01B 11/27

(54) **SIX-DEGREE-OF-FREEDOM ERROR CORRECTION METHOD AND APPARATUS**

(30) Priority: 28.09.2022 TW 111136677
(71) Applicant: Chroma ATE Inc., 333001 Taoyuan City (TW)
(72) Inventor: Hsieh, Cheng Chih, 333001 Taoyuan City (TW); Wu, Tien Chi, 333001 Taoyuan City (TW); Lee, Ming-Long, 333001 Taoyuan City (TW); Lin, Yu-Hsuan, 333001 Taoyuan City (TW); Lin, Tsung-I, 333001 Taoyuan City (TW); Ma, Chien-Hao, 333001 Taoyuan City (TW)
(74) Representative: Westphal, Mussgnug & Partner Patentanwälte mbB

(57) **Abstract**

The present invention relates to six-degree-of-freedom error correction method and apparatus. The apparatus comprises a six-axis correction stage, an auto-collimation measurement device, a light splitter, a telecentric image measurement device, and a controller. The six-axis correction stage is used for carrying a device under test; the auto-collimation measurement device is arranged above the six-axis correction stage along a measurement optical axis; the light splitter is arranged on the measurement optical axis and is interposed between the six-axis correction stage and the auto-collimation measurement device; the telecentric image measurement device is arranged on one side of the measurement optical axis and corresponds to the light splitter. The method controls the six-axis correction stage to correct rotation errors in at least two degrees of freedom of the device under test according to a measurement result of the auto-collimation measurement device, and controls the six-axis correction stage to correct translation and yaw errors in at least three degrees of freedom of the device under test according to a measurement result of the telecentric image measurement device by means of the controller.

## Description

### FIELD OF THE INVENTION

The present invention relates to an error correction technology for the positioning of product components by using the principle of optical measurement, especially to a six-degree-of-freedom error correction method and apparatus.

### DESCRIPTION OF THE PRIOR ART

Errors in the processing and assembly of optical components have a huge impact on an optical system, especially, on a projection display module in a head-mounted display device used in virtual reality (VR), augmented reality (AR), mixed reality (MR), or extended reality (XR). When such optical components are produced or assembled in a related system, if there is a positioning error, it will directly affect the visual effect quite significantly.

Generally speaking, errors generated by an article in the three-dimensional space includes six -degree-of-freedom errors, which are translation errors in forward/ backward, up/down, and left/right and rotation errors in pitch, yaw, and roll. In other words, in order to make the result of error correction more accurate, not only the measurement and correction technologies must have six-degree-of-freedom specifications, but it is best to have a design for simultaneous six-degree-of-freedom positioning measurements and corrections on a single correction apparatus.

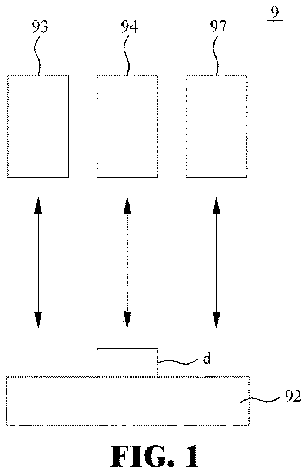

However, although the existing error correction technology has a six-degree-of-freedom specification, positioning measurements and corrections are performed for respective degrees of freedom at different times step by step and even in different apparatuses, rather than for all degrees of freedom at the same time in a single apparatus. As shown in Fig. 1, an existing error correction apparatus 9 mainly includes a correction stage 92 , an auto-collimation measurement device 93 , a telecentric image measurement device 94, and a confocal distance measurement device 97. Among them, the auto-collimation measurement device 93 is used to measure the pitch and roll degrees of freedom, the telecentric image measurement device 94 is used to measure the front forward/back backward, left/right, and yaw degrees of freedom, and the confocal distance measurement device 97 is used to measure the up/down degree of freedom.

As mentioned above, The above-mentioned said three types of optical measurement devices take turns to can each perform measurements and corrections for specific degrees of freedom , but they must be performed step by step. That is to say, it is necessary to transfer a device under test d to under the bottom of the auto-collimation measurement device 93, the telecentric image measurement device 94, and the confocal distance measurement device 97 in sequence so as to perform corrections for respective degrees of freedom. Thus, too many the product components are transfersred too many times, leading to long overall operation time for corrections of the single device under test d, resulting in poor production efficiency. Moreover, errors are likely to be generated again during the process of transferring the device under test d on the correction stage 92, resulting in a greatly reduced correction effect. In addition, the measurement devices are arranged side by side, causing a large volume occupied by the overall apparatus and poor floor efficiency.

### SUMMARY OF THE INVENTION

The main objective of the present invention is to provide a six-degree-of-freedom error correction method and apparatus so that multiple optical measurement devices can be integrated for simultaneous measurements and error corrections in six-degree-of-freedom, thereby optimizing the accuracy and efficiency of error corrections, and saving time cost and the volume occupied by the optical measurement devices.

To achieve the above objective, a six-degree-of-freedom error correction apparatus of the present invention comprises a six-axis correction stage, an auto-collimation measurement device, a light splitter, a telecentric image measurement device, an optical component, a confocal distance measurement device, and a controller. Among them, the six-axis correction stage is used for carrying a device under test; the auto-collimation measurement device is arranged above the six-axis correction stage along a measurement optical axis; the light splitter is arranged on the measurement optical axis and is interposed between the six-axis correction stage and the auto-collimation measurement device; the telecentric image measurement device is arranged on one side of the measurement optical axis and corresponds to the light splitter; the confocal distance measurement device is arranged on one side of the measurement optical axis and corresponds to the optical component. Also, the optical component is arranged on the measurement optical axis, is interposed between the six-axis correction stage and the auto-collimation measurement device, and spectroscopically reflects or totally reflects a measurement light of the confocal distance measurement device to the device under test along the measurement optical axis.

To achieve the above objective, a six-degree-of-freedom error correction method of the present invention can control the six-axis correction stage to correct rotation errors in at least two degrees of freedom of the device under test according to a measurement result of the auto-collimation measurement device, control the six-axis correction stage to correct translation and rotation errors in at least three degrees of freedom of the device under test according to a measurement result of the telecentric image measurement device, and control the six-axis correction stage to correct a translation error in at least one degree of freedom of the device under test according to a measurement result of the confocal distance measurement device by means of the controller, which is electrically connected to the six-axis correction stage, the auto-collimation measurement device, the telecentric image measurement device, and the confocal distance measurement device.

Preferably, the optical component can be arranged between the auto-collimation measurement device and the light splitter; the optical component can also be arranged between the light splitter and the six-axis correction stage. Preferably, the optical component can be a spectroscope, a reflector, a lens with a partially light-splitting coating, a lens with a partially reflecting coating, a spectroscope with a hollowed-out light channel, or a reflector with a hollow-caved hollowed-out light channel. Preferably, the light splitter can be a spectroscope, a lens with a partially light-splitting coating, or a spectroscope with a hollowed-out light channel. Preferably, the auto-collimation measurement device can measure two first the rotation errors of in pitch and roll two degrees of freedom in pitch and roll of the device under test; the telecentric image measurement device can measure two first the translation errors in forward/backward and left/right of two degrees of freedom and a second rotation the yaw error of in a yaw one degree of freedom of the device under test on a plane; the confocal distance measurement device can measure a second the translation error in an up/down of one degree of freedom of the device under test in height.

Preferably, the six-degree-of-freedom error correction method can control the six-axis correction stage to correct the first rotation errors of the device under test according to the measurement result of the auto-collimation measurement device, and then control the six-axis correction stage to correct the first and second translation errors and the second rotation yaw error of the device under test according to the measurement results of the telecentric image measurement device and the confocal distance measurement device by means of the controller. Preferably, the six-degree-of-freedom error correction method can control the confocal distance measurement device to measure a the translation error of in the up/down one degree of freedom of the device under test in height at a location, control the translation shift of the six-axis correction stage in a horizontal direction, then control the confocal distance measurement device to measure another translation error in the up/down of one degree of freedom of the device under test in height at another location, and finally correct the translation errors in the up/down of at least one degree of freedom of the device under test in height according to the measurement results of the confocal distance measuring device at the two locations by means of the controller.

It can be seen from the above that the six-degree-of-freedom error correction method and apparatus of the present invention have successfully integrated the auto-collimation measurement device, the telecentric image measurement device, and the confocal distance measurement device so that the three optical devices can use the same optical axis for measurement, and form a six-degree-of-freedom error correction system having an optical coaxial structure together with the six-axis correction stage. Compared with the prior art, the present invention has the following advantages: 1. positioning measurements for six -degrees -of -freedom can be performed synchronously without the need to transfer to different locations for measurements and corrections, so more accurate measurement results can be obtained; 2. since there is no time for transferring to different locations and re-positioning, the correction efficiency can be significantly improved; 3. the three measurement devices are integrated in the same apparatus and the same measurement optical axis is used for measurement, so such a compact configuration can significantly reduce the volume occupied by the overall apparatus.

### BRIEF DESCRIPTION OF DRAWINGS

Fig. 1 shows a system architecture diagram of the prior art.
Fig. 2A shows a system architecture diagram according to a first embodiment of the present invention.
Fig. 2B shows a perspective view of the configuration of two measurement devices in the first embodiment of the present invention.
Fig. 3A shows a system architecture diagram according to a second embodiment of the present invention.
Fig. 3B shows a perspective view of the configuration of three measurement devices in the second embodiment of the present invention.
Fig. 4A shows a system architecture diagram according to a third embodiment of the present invention.
Fig. 4B shows a perspective view of the configuration of three measurement devices in the third embodiment of the present invention.
Figs. 5A to 5C show perspective views of three different versions variant aspects of a light splitter respectively.
Figs. 6A to 6C show perspective views of three different versions variant aspects respectively, in which reflectors are used as an optical component.

### DETAILED DESCRIPTION OF THE INVENTION

Before a six-degree-of-freedom error correction method and apparatus of the present invention is described in detail in the embodiments, please note that in the following description, similar components will be designated by the same reference numerals. Furthermore, the drawings of the present invention are only for illustration purposes, they are not necessarily drawn to scale, and not all details are necessarily presented in the drawings.

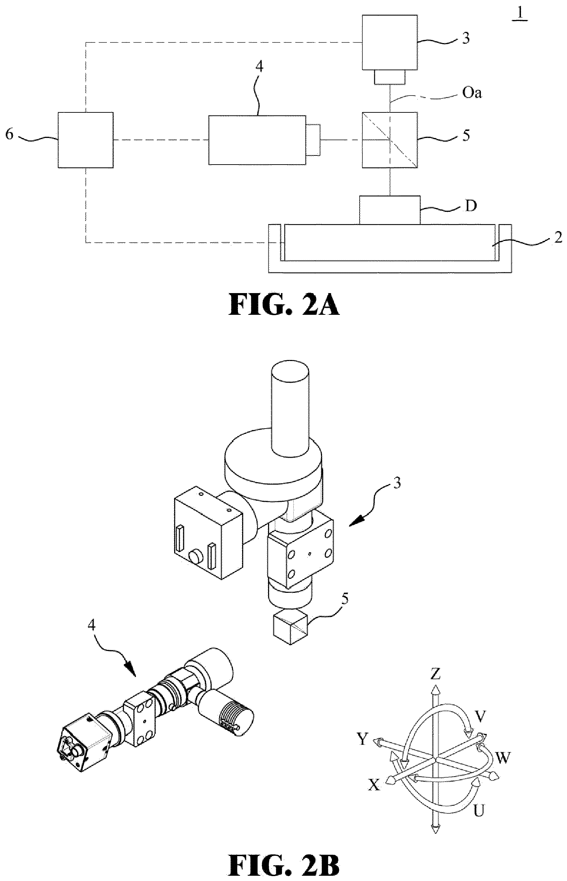

Please refer to Fig. 2A and Fig. 2B first. Fig. 2A shows a system architecture diagram according to a first embodiment of the present invention, and Fig. 2B shows a perspective view of the configuration of two measurement devices in the first embodiment of the present invention. As shown in the figure, a six-degree-of-freedom error correction apparatus 1 of the first embodiment of the present invention mainly includes a six-axis correction stage 2, an auto-collimation measurement device 3, a light splitter 5, a telecentric image measurement device 4, and a controller 6. The six-axis correction stage 2 is used to carry a device under test D, and can also adjust the orientation of the device under test D in the six -degrees -of -freedom of the three-dimensional space. Please referring to Fig. 2B, the six -degrees -of -freedom include a forward/backward translation on X-axis, an up/down translation on Z-axis, a left/right translation on Y-axis, and pitch roll (U), roll pitch (V), and yaw (W) rotatingions around X-axis, Y-axis, and Z-axis respectively.

Furthermore, the auto-collimation measurement device 3 is arranged above the six-axis correction stage 2, and is aligned with the device under test D carried on the six-axis correction stage 2 along a measurement optical axis Oa, that is, the measurement optical path of the auto-collimation measurement device 3 overlaps or is parallel to the measurement optical axis Oa. The light splitter 5 is located on the measurement optical axis Oa, and is arranged between the six-axis correction stage 2 and the auto-collimation measurement device 3, that is, the six-axis correction stage 2, the device under test D, the light splitter 5, and the auto-collimation measurement device 3 are coaxially arranged along the measurement optical axis Oa.

The telecentric image measurement device 4 is arranged on one side of the measurement optical axis Oa and corresponds to the light splitter 5. Moreover, the telecentric image measurement device 4 is spaced apart from the measurement optical axis Oa by a distance, and has a measurement optical path, which is initially perpendicular to the measurement optical axis Oa, then overlaps or is parallel to the measurement optical axis Oa through the spectroscopic refraction of the light splitter 5, and finally, is aligned with the device under test D carried on the six-axis correction stage 2.

The light splitter 5 of the first embodiment can be a light-splitting lens. With its spectroscopic characteristics, the auto-collimation measurement device 3 located directly above the light splitter 5 can obtain a measurement image of the device under test D through transmission for correction. At the same time, the telecentric image measurement device 4 located on one side of the light splitter 5 can also obtain a measurement image of the device under test D through reflection for correction.

In addition, the controller 6 is electrically connected to the six-axis correction stage 2, the auto-collimation measurement device 3, and the telecentric image measurement device 4. Regarding the correction steps of the present embodiment, the controller 6 first controls the auto-collimation measurement device 3 to measure the rotation errors in pitch U V and roll V U of the device under test D, and controls the six-axis correction stage 2 to correct the rotation errors in the two degrees of freedom according to the measurement result. Next, the controller 6 controls the telecentric image measurement device 4 to measure the translation errors and the rotation error in four degrees of freedom of the device under test D, including the translation errors in forward/backward and left/right, and the rotation error in yaw (W) error on a plane, and the translation error in up/down height (Z-axis), and controls the six-axis correction stage 2 to correct the above-mentioned errors in the four degrees of freedom according to the measurement result.

It is specifically stated that the reason for correcting the rotation errors in pitch (UV) and roll (VU) and then correcting the translation errors in forward/backward and left/right, and the rotation error in yaw (W) error on a plane, and the translation error in up/down height in the correction steps is that the subsequent four-degree-of-freedom errors correction are based on the premise that there are no rotation errors in pitch (UV) and roll (UV) because the rotation errors in pitch (UV) and roll (VU) will affect the measurement result of the subsequent four-degree-of-freedom errors.

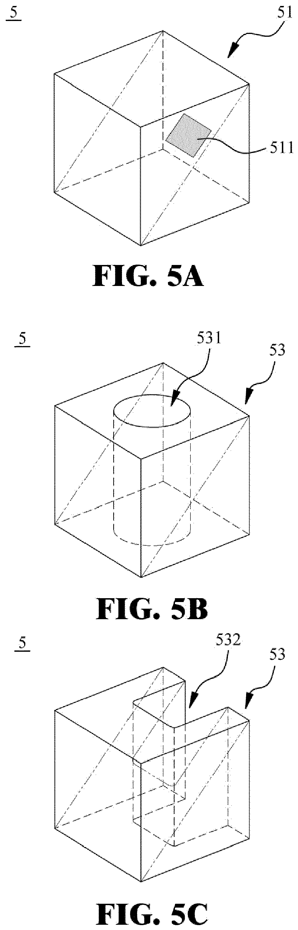

Please refer to Figs. 5A to 5C at the same time, which show perspective views of three different versions variant aspects of the light splitter 5. Since a general light-splitting lens will split a light beam into a transmitted light and a reflected light, and the present embodiment presets that the transmitted light and the reflected light each have 50% of incident luminous flux, about 50% of the luminous flux will be lost every time it passes through the light-splitting lens on a preset optical path. However, in order to reduce the attenuation of a light source caused by light splitting and not to affecting the measurement result of the auto-collimation measurement device 3, the light splitter 5 of the present embodiment can be a lens 51 with a partially light-splitting coating 511, as shown in Fig. 5A, wherein the partially light-splitting coating 511 corresponds to the telecentric image measurement device 4 and is used for the telecentric image measurement device 4 to obtain a measurement image. Since the lens 51 itself is made of a light-transmitting material, the light source of the auto-collimation measurement device 3 can can directly pass through the rest of the lens 51 except the partially light-splitting coating 511 so that it can fully avoid the attenuation of the light source caused by light splitting and affecting data interpretation.

Moreover, in another alternative, the light splitter 5 can also be a spectroscope 53 with a hollowed-out light channel. Since the spectroscope 53 itself has a light-splitting coating, it can reflect an image for the telecentric image measuring device 4 to obtain a measurement image. The light source of the auto-collimation measurement device 3 can directly pass through the hollowed-out light channel, so similarly, it can avoid the attenuation of the light source caused by light splitting and affecting data interpretation. The hollowed-out light channel can be a drill hole 531 (as shown in Fig. 5B) or a through groove 532 (as shown in Fig. 5C).

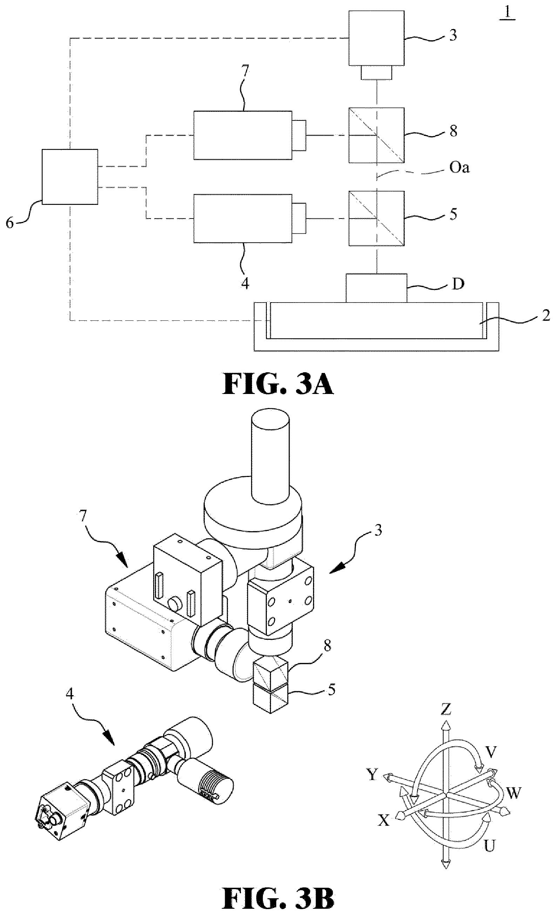

Please refer to Fig. 3A and Fig. 3B. Fig. 3A shows a system architecture diagram according to a second embodiment of the present invention, and Fig. 3B shows a perspective view of the configuration of three measurement devices in the second embodiment of the present invention. As shown in the figure, the main difference between the second embodiment and the first embodiment is that the second embodiment further includes a confocal distance measurement device 7 and an optical component 8. Among them, wherein the optical component 8 is located on the measurement optical axis Oa, and is arranged between the auto-collimation measuring device 3 and the light splitter 5, that is, the six-axis correction stage 2, the device under test D, the light splitter 5, the optical component 8, and the auto-collimation measurement device 3 are coaxially arranged along the measurement optical axis Oa.

The confocal distance measurement device 7 is arranged on one side of the measurement optical axis Oa, and corresponds to the optical component 8. The auto-collimation measurement device 3, the telecentric image measurement device 4, and the confocal distance measurement device 7 are respectively arranged along three axes X, Y, and Z, and are spaced apart from one another by a specific distance in height (Z - axis). Moreover, the confocal distance measurement device 7 is also spaced apart from the measurement optical axis Oa by a distance, and has a measurement optical path, which is initially perpendicular to the measurement optical axis Oa, then overlaps or is parallel to the measurement optical axis Oa through the spectroscopic refraction or reflection of the optical component 8, and finally, is aligned with the device under test D carried on the six-axis correction stage 2.

Accordingly, since the optical component 8 is arranged between the auto-collimation measurement device 3 and the light splitter 5, the measurement light of the confocal distance measurement device 7 will first be spectroscopically reflected or directly reflected by the optical component 8, then pass through the light splitter 5, and finally reach the device under test D for measurement. In addition, as shown in Fig. 3A, the controller 6 is electrically connected to the six-axis correction stage 2, the auto-collimation measurement device 3, the telecentric image measurement device 4, and the confocal distance measurement device 7.

Regarding the implementation steps of the present embodiment, as in the aforementioned first embodiment, the controller 6 first controls the six-axis correction stage 2 to correct the rotation errors in pitch (UV) and roll (VU) of the device under test D according to the measurement result of the auto-collimation measurement device 3; then, the controller 6 controls the six-axis correction stage 2 to correct the translation errors in forward/backward and left/right and the rotation error in yaw (W)of the device under test D according to the measurement result of the telecentric image measurement device 4; at the same time, the controller 6 controls the six-axis correction stage 2 to correct the translation error in up/down of the device under test D in height (Z-axis) according to the measurement result of the confocal distance measurement device 7. As for the measurement sequence of the telecentric image measurement device 4 and the confocal distance measurement device 7 and their corresponding correction sequence, they are not limited, and can be exchanged with each other or even performed at the same time.

Furthermore, it is specifically stated that the above-mentioned first embodiment uses the telecentric image measuring device 4 to measure the translation error in up/down height (Z-axis), but it may be slightly insufficient in accuracy and detection speed. Therefore, in the present embodiment, the confocal distance measurement device 7 is specially added to measure the translation error in up/down height (Z-axis). The confocal distance measurement device 7 of the present embodiment adopts laser point distance measurement to measure, so it is quite fast and accurate.

On the other hand, since the confocal distance measurement device 7 of the present embodiment adopts laser point distance measurement for measurement, in other implementation embodied aspects, it is also possible to successively measure height values at two different measurement points on the device under test D. In this way, in addition to obtaining the translation error in up/down height (Z-axis), it is also possible to simultaneously confirm whether the device under test D has rotation errors in pitch and roll. Once the height values of the device under test D at the two measurement points are found to be inconsistent, it means that the correction of the rotation errors in pitch (UV) and roll (VU) performed according to the measurement result of the auto-collimation measurement device 3 is wrong, and should be re-performed.

Regarding the versions aspects of the light splitter 5 and the optical component 8 in the present embodiment, since a general light-splitting lens will split a light beam into a transmitted light and a reflected light, about 50% of luminous flux will be lost every time it passes through the light-splitting lens on a preset optical path. In the present embodiment, if both the light splitter 5 and the optical component 8 are general light-splitting lenses, a measurement light emitted by the confocal distance measurement device 7 will return to the device 7 after four light splittings, resulting in that final received luminous flux will be 6.25% of original luminous flux due to attenuation, and the measurement result may be affected.

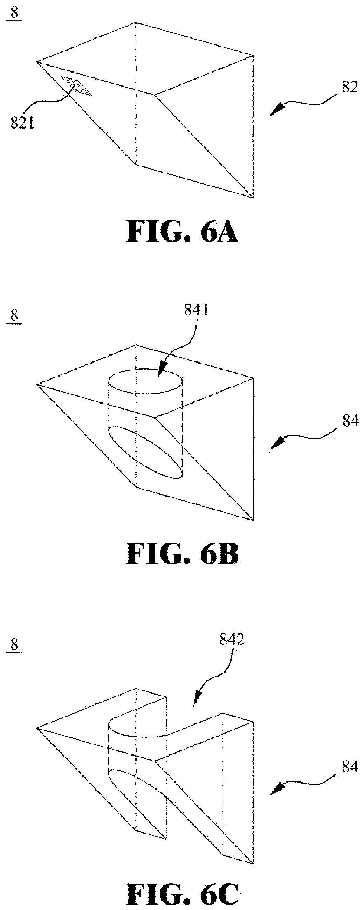

Accordingly, in order to reduce the number of light splittings, the present embodiment can adopt the following two means: one is that the optical component 8 is a general light-splitting lens while the light splitter 5 is modified, that is, the light splitter 5 is one of the three different versions variant aspects shown in Figs 5A to 5C; the other is that the light splitter 5 is a general light-splitting lens while the optical component 8 is a special reflector, that is, the optical component 8 is one of the three different versions variant aspects shown in Figs. 6A to 6C.

Continuing from the above, lif the light splitter 5 adopts the partially light-splitting coating 511, as shown in Fig. 5A, the telecentric image measurement device 4 can successfully obtain a measurement image through the partially light-splitting coating 511 while the light source of the auto-collimation measurement device 3 and the laser measurement light of the confocal distance measurement device 7 directly pass through the lens without encountering light splitting. Accordingly, only the optical component 8 generates a light-splitting effect, so the luminous flux attenuation is limited.

In addition, as shown in Fig. 5B and Fig. 5C, the hollowed-out light channel, such as the drill hole 531 and the through groove 532, provided by the light splitter 5 can also allow the light source of the auto-collimation measurement device 3 and the laser measurement light of the confocal distance measurement device 7 to pass through directly without encountering light splitting, thereby avoiding the measurement result being affected by multiple light splittings.

Also, please refer to Figs. 6A to 6C. If the light splitter 5 is a general light-splitting lens, while then the optical component 8 can also be is a special reflector as shown in the figure. Since the characteristic of the reflector is direct reflection, and will not cause light attenuation, the laser measurement light of the confocal distance measurement device 7 will encounter only two light splittings back and forth through the light splitter 5.

However, considering that the reflector will block the measurement of the auto-collimation measurement device 3, the optical component 8 can be a lens 82 with a partially reflecting coating 821, as shown in Fig. 6A. The partially reflecting coating 821 can directly reflect the laser measurement light of the confocal distance measurement device 7 while the auto-collimation measurement device 3 can make a measurement through the rest of the lens 82.

Regarding other feasible alternatives, for example, the optical component 8 can also be a reflector 84 with a hollowed-out light channel. The reflector 84 itself can reflect the measurement light of the confocal distance measuring device 7 while the hollowed-out light channel can allow the light source of the auto-collimation measurement device 3 to directly pass through for measurement, so the reflector 84 will not block the measurement of the auto-collimation measurement device 3. Likewise, the hollowed-out light channel can be a drill hole 841 (as shown in Fig. 6B), a through groove 842 (as shown in Fig. 6C), or other equivalent hollowed-out structures, but is not limited to these.

Furthermore, in order to obtain excellent measurement results, the light splitter 5 of the present embodiment can be the versions variant aspects of the light splitter as shown in Figs. 5A to 5C while the optical component 8 can be the versions variant aspects of the reflector as shown in Figs. 6A to 6C. For example, the light-splitting lens of Fig. 5A is matched with the reflector of Fig. 6A, and the partially light-splitting coating 511 and the partially reflecting coating 821 are staggered from each other. Accordingly, the measurement light of the confocal distance measurement device 7 is only reflected by the partially reflecting coating 821 while the light source of the auto-collimation measurement device 3 directly passes through the two lenses; both will not encounter light splitting.

Moreover, in the present embodiment, the light-splitting lens of Fig. 5B can be matched with the reflector of Fig. 6B, and the drill hole 841 of the reflector 84 corresponds to the drill hole 531 of the spectroscope 53; or the light-splitting lens of Fig. 5C can also be matched with the reflector of Fig. 6C, and the through groove 842 of the reflector 84 corresponds to the through groove 532 of the spectroscope 53. With this configuration, the light source of the auto-collimation measurement device 3 can directly pass through the drill holes 531, 841 or the through grooves 532, 842 without encountering light splitting; and the measurement light of the confocal distance measurement device 7 only encounters one light splitting.

As a whole, under the principle of avoiding excessive loss of luminous flux caused by multiple light splittings, the light splitter 5 and the optical component 8 of the present embodiment can be any combinations of the light-splitting lenses shown in Figs. 5A to 5C and the reflectors shown in Figs. 6A to 6C. Moreover, the optical component 8 can also be the light-splitting lens of Figs. 5A to 5C.

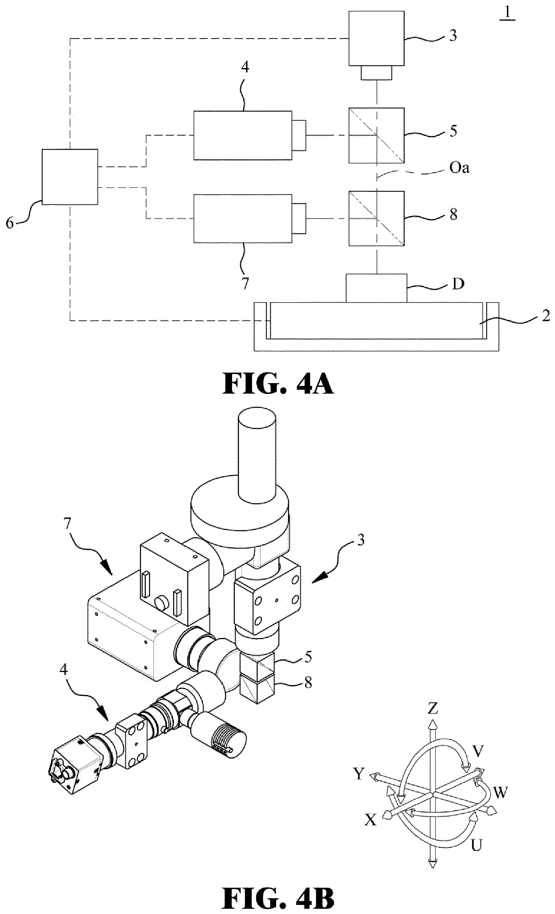

Please refer to Fig. 4A and Fig. 4B. Fig. 4A shows a system architecture diagram according to a third embodiment of the present invention, and Fig. 4B shows a perspective view of the configuration of three measurement devices in the third embodiment of the present invention. The third embodiment is different from the second embodiment in that the optical component 8 is arranged between the light splitter 5 and the six-axis correction stage 2, that is, the six-axis correction stage 2, the device under test D, the optical component 8, the light splitter 5, and the auto-collimation measurement device 3 are coaxially arranged along the measurement optical axis Oa.

It should be particularly noted that since the optical component 8 is located between the light splitter 5 and the six-axis correction stage 2, the measurement light of the confocal length measurement device 7 is spectroscopically refracted or directly reflected by the optical component 8 and then, can directly reach the device under test D carried on the six-axis correction stage 2. On the contrary, the measurement light of telecentric image measurement device 4 must pass through the light splitter 5 and the optical component 8 successively to measure the device under test D on the six-axis correction stage 2. In this case, the grayscale value of an image measured by the telecentric image measurement device 4 may decrease and affect the measurement result.

In order to resolve the above problem, in addition to being general light-splitting lenses, the optical component 8 and the light splitter 5 of the present embodiment can be the versions variant aspects of the light splitter shown in Figs. 5A to 5C. Moreover, the optical component 8 of the present invention can also be the versions variant aspects of the reflector shown in Figs. 6A to 6C. The principle of using these special optical members in the present embodiment is the same as that of the second embodiment mentioned above, and both of them are is to avoid the attenuation of luminous flux or image presentation caused by the measurement lights, the measurement images, and the light source encountering multiple light splittings.

The above-mentioned embodiments are only examples for the convenience of description, and the scope of the present invention should be subject to the following claims, rather than limited to the above-mentioned embodiments.

## Claims

1. A six-degree-of-freedom error correction apparatus, comprising:
a six-axis correction stage, for carrying a device under test;
an auto-collimation measurement device, arranged above the six-axis correction stage along a measurement optical axis;
a light splitter, arranged on the measurement optical axis and interposed between the six-axis correction stage and the auto-collimation measurement device;
a telecentric image measurement device, arranged on one side of the measurement optical axis and corresponding to the light splitter; and
a controller, electrically connected to the six-axis correction stage, the auto-collimation measurement device, and the telecentric image measurement device,
wherein the controller controls the six-axis correction stage to correct rotation errors in at least two degrees of freedom of the device under test according to a measurement result of the auto-collimation measurement device, and controls the six-axis correction stage to correct translation and yaw errors in at least three degrees of freedom of the device under test according to a measurement result of the telecentric image measurement device.

2. The six-degree-of-freedom error correction apparatus of claim 1, further comprising a confocal distance measurement device and an optical component, wherein the optical component is arranged on the measurement optical axis and is interposed between the six-axis correction stage and the auto-collimation measurement device; the confocal distance measurement device is arranged on one side of the measurement optical axis, corresponds to the optical component, and is electrically connected to the controller, wherein the optical component spectroscopically reflects or totally reflects a measurement light of the confocal distance measurement device to the device under test along the measurement optical axis; the controller controls the six-axis correction stage to correct a translation error in at least one degree of freedom of the device under test according to a measurement result of the confocal distance measurement device.

3. The six-degree-of-freedom error correction apparatus of claim 2, wherein the optical component is arranged between the auto-collimation measurement device and the light splitter; the optical component is at least one selected from a group consisting of a spectroscope, a reflector, a lens with a partially light-splitting coating, a lens with a partially reflecting coating, a spectroscope with a hollowed-out light channel, and a reflector with a hollowed-out light channel; the light splitter is at least one selected from a group consisting of a spectroscope, a lens with a partially light-splitting coating, and a spectroscope with a hollowed-out light channel.

4. The six-degree-of-freedom error correction apparatus of claim 2, wherein the optical component is arranged between the light splitter and the six-axis correction stage; the optical component is at least one selected from a group consisting of a spectroscope, a reflector, a lens with a partially light-splitting coating, a lens with a partially reflecting coating, a spectroscope with a hollowed-out light channel, and a reflector with a hollowed-out light channel.

5. The six-degree-of-freedom error correction apparatus of claim 2, wherein the auto-collimation measurement device measures the rotation errors of two degrees of freedom in pitch and roll of the device under test; the telecentric image measurement device measures the translation errors of two degrees of freedom and the yaw error of one degree of freedom of the device under test on a plane; the confocal distance measurement device measures the translation error of one degree of freedom of the device under test in height.

6. The six-degree-of-freedom error correction apparatus of claim 5, wherein the controller first controls the six-axis correction stage to correct the rotation errors of the device under test according to the measurement result of the auto-collimation measurement device, and then controls the six-axis correction stage to correct the translation errors and the yaw error of the device under test according to the measurement results of the telecentric image measurement device and the confocal distance measurement device.

7. A six-degree-of-freedom error correction method, comprises the steps of:
(A) controlling a six-axis correction stage to correct rotation errors in at least two degrees of freedom of a device under test according to a measurement result of an auto-collimation measurement device by using a controller, wherein the device under test is place on the six-axis correction stage; the auto-collimation measurement device is arranged above the six-axis correction stage along a measurement optical axis; and
(B) controlling the six-axis correction stage to correct translation and yaw errors in at least three degrees of freedom of the device under test according to a measurement result of a telecentric image measurement device by using the controller, wherein the telecentric image measurement device is arranged on one side of the measurement optical axis and corresponds to a light splitter, which is arranged on the measurement optical axis and is interposed between the six-axis correction stage and the auto-collimation measurement device.

8. The six-degree-of-freedom error correction method of claim 7, wherein in the step (B), the controller further controls the six-axis correction stage to correct a translation error in at least one degree of freedom of the device under test according to a measurement result of a confocal distance measurement device; the confocal distance measurement device is arranged on one side of the measurement optical axis, corresponds to an optical component, and is electrically connected to the controller; the optical component is arranged on the measurement optical axis and is interposed between the six-axis correction stage and the auto-collimation measurement device, wherein the optical component spectroscopically reflects or totally reflects a measurement light of the confocal distance measurement device to the device under test along the measurement optical axis.

9. The six-degree-of-freedom error correction method of claim 8, in the step (A), the auto-collimation measurement device measures the rotation errors of two degrees of freedom in pitch and roll of the device under test; in the step (B), the telecentric image measurement device measures the translation errors of two degrees of freedom and the yaw error of one degree of freedom of the device under test on a plane; the confocal distance measurement device measures the translation error of one degree of freedom of the device under test in height.

10. The six-degree-of-freedom error correction method of claim 9, wherein in the step (B), after the controller controls the confocal distance measurement device to measure the translation error of one degree of freedom of the device under test in height at a location, and after the controller controls the translation of the six-axis correction stage in a horizontal direction, the controller controls the confocal distance measurement device to measure another translation error of one degree of freedom of the device under test in height at another location; the controller corrects the translation errors in at least one degree of freedom of the device under test in height according to the measurement results of the confocal distance measuring device at the two locations.
